# DEMANDE DE BREVET EUROPEEN

(11) **EP 3 396 290 A1**
(43) Date de publication de la demande: **31.10.2018**
(21) Numéro de dépôt: 18168417.6
(22) Date de dépôt: 20.04.2018
(51) Int. Cl.: F28D 20/02, B60H 1/00

(54) **MODULE THERMIQUE COMPRENANT UN BOÎTIER ET UN ECHANGEUR THERMIQUE**

(30) Priorité: 28.04.2017 FR 1753791
(71) Demandeur: Valeo Systemes Thermiques-THS, 78322 Le Mesnil Saint Denis Cedex (FR)
(72) Inventeur: ROBILLON, Lionel, 72210 LA SUZE SUR SARTHE (FR); BELLENFANT, Aurélie, 72210 LA SUZE SUR SARTHE (FR); TISON, Frédéric, 72210 LA SUZE SUR SARTHE (FR); JOVET, Bastien, 78322 LE MESNIL SAINT DENIS CEDEX (FR); MOREAU, Sylvain, 72210 LA SUZE SUR SARTHE (FR); GOUR, Josselin, 78322 LE MESNIL SAINT DENIS CEDEX (FR)
(74) Mandataire: Tran, Chi-Hai

(57) **Abrégé**

Module thermique (1) pour véhicule automobile comprenant un boîtier (2) et un échangeur thermique (3), ledit échangeur thermique (3) comprenant une pluralité de tubes (30) empilés suivant un même axe (X) et destinés à être parcourus par un fluide réfrigérant, ledit boîtier (2) définissant un volume (V) destiné à recevoir la pluralité de tubes (30), un matériau à changement de phase est contenu dans le volume (V) du boîtier (2) en contact direct avec les tubes (30) de l'échangeur thermique (3), les tubes (30) étant au moins en partie immergés dans le matériau à changement de phase.

## Description

Le domaine de la présente invention est celui des installations de conditionnement d'air pour un véhicule, notamment automobile. L'invention relève plus spécifiquement des modules thermiques pouvant être associés à de telles installations.

Un véhicule est couramment équipé d'une installation de conditionnement d'air pour traiter thermiquement l'air présent ou envoyé dans l'habitacle du véhicule. Une telle installation comprend un circuit fermé à l'intérieur duquel circule un fluide réfrigérant et qui fonctionne dans un mode pompe à chaleur. Successivement, suivant le sens de circulation du fluide réfrigérant à son travers, le circuit fermé comprend essentiellement un compresseur, un condenseur, un détendeur et un évaporateur.

Dans le fonctionnement du circuit fermé en mode pompe à chaleur, la température de l'habitacle est tempérée par la circulation du fluide réfrigérant entre le condenseur disposé dans le véhicule au voisinage de l'habitacle et l'évaporateur situé au contact de l'air extérieur du véhicule, plus précisément situé en face avant du véhicule.

De façon bien connue, l'utilisation du compresseur a pour but de comprimer le fluide réfrigérant dans le circuit fermé.

Dans le fonctionnement en mode pompe à chaleur d'un tel circuit fermé, le fluide réfrigérant absorbe de la chaleur au niveau de l'évaporateur et le fluide réfrigérant cède de la chaleur au niveau du condenseur.

Toutefois, dans la configuration de l'évaporateur évoqué, l'évaporateur est directement exposé à l'air extérieur au véhicule. Cependant, dans le fonctionnement en mode pompe à chaleur, au démarrage d'un véhicule automobile, une forte puissance est nécessaire pour réchauffer l'air de l'habitacle du véhicule jusqu'à atteindre la température souhaitée par un passager du véhicule.

Par ailleurs, dans les véhicules automobiles électriques ou hybrides, particulièrement dans le cas où le compresseur du circuit de fluide réfrigérant est activé par un moteur électrique, cette demande de puissance impacte également directement l'autonomie du véhicule.

Une solution consiste à associer un module thermique à un tel circuit. En effet, un tel module thermique peut être disposé dans le circuit fermé, de préférence en parallèle de l'évaporateur. Ce module thermique peut être alors configuré pour être parcouru par le même fluide réfrigérant que celui du circuit fermé. Le module thermique est alors utilisé en stockeur thermique de sorte à absorber des calories pour ensuite participer à l'augmentation de l'enthalpie du fluide réfrigérant le traversant, ceci au démarrage du véhicule automobile. Toutefois, de tels modules thermiques restent limités par leur fonctionnement et ne permettent pas d'atteindre rapidement la température de l'habitacle désirée par un passager.

De plus, de tels modules thermiques ne permettent pas de réduire de façon significative la puissance électrique consommée par le compresseur du circuit fermé.

La présente invention vise ainsi à remédier à au moins l'un de ces inconvénients, en proposant un module thermique pour véhicule automobile qui permet de favoriser rapidement l'augmentation de l'enthalpie du fluide réfrigérant parcourant ce dernier tout en évitant un fonctionnement en pleine charge de l'évaporateur du circuit fermé fonctionnant en mode pompe à chaleur.

A cet effet, l'invention a pour objet un module thermique pour véhicule automobile comprenant un boîtier et un échangeur thermique, ledit échangeur thermique comprenant une pluralité de tubes empilés suivant un même axe et destinés à être parcourus par un fluide réfrigérant, ledit boîtier définissant un volume destiné à recevoir la pluralité de tubes, un matériau à changement de phase est contenu dans le volume du boîtier en contact direct avec les tubes de l'échangeur thermique, les tubes étant au moins en partie immergés dans le matériau à changement de phase.

On comprendra par l'expression « contact direct », un contact physique entre un premier élément et un deuxième élément.

D'autre part, on comprendra le terme « immergé(s) » comme n'étant pas limité à un élément liquide. Ainsi, selon l'invention, le terme « immergé(s) » peut faire référence à un élément solide. Par exemple, dans le cas où le matériau à changement de phase est formé par des micro-billes, les tubes peuvent être au moins en partie immergés dans les micro-billes.

Grâce à ces caractéristiques, il est possible de concevoir un module thermique pouvant stocker une quantité de calories rapidement. En effet, dans une utilisation d'un circuit fermé de fluide réfrigérant pour véhicule automobile fonctionnant en mode pompe à chaleur et comprenant un tel module thermique, le matériau à changement de phase est configuré pour emmagasiner des calories. En particulier, le temps nécessaire pour le matériau à changement de phase pour céder ces calories à l'échangeur thermique est accéléré.

Lorsque le circuit fermé est utilisé dans un mode pompe à chaleur, on comprendra que l'installation de conditionnement d'air du véhicule est utilisée en tant que chauffage avec pour objectif principal d'augmenter la température de l'habitacle du véhicule.

Avantageusement, les tubes sont immergés dans le matériau à changement de phase.

Avantageusement, le matériau à changement de phase occupe approximativement 90 pourcent du volume du boîtier. Ce pourcentage de remplissage du boîtier permet d'éviter les risques de gonflement du boîtier lors des changements de phase du matériau à changement de phase.

Grâce à cette caractéristique, il est possible d'augmenter la surface de contact de l'échangeur thermique dudit module thermique en contact direct avec le matériau à changement de phase. De plus, cette configuration a pour effet d'empêcher des pertes de calories pouvant être dégagées par une partie des tubes.

Selon un mode de réalisation de l'invention, les tubes sont des tubes plats. Un tube plat est un tube dont la section de passage du fluide réfrigérant est rectangulaire, ou sensiblement rectangulaire.

Selon un autre mode de réalisation de l'invention, chaque tube est formé par deux plaques disposées l'une contre l'autre et délimitant ensemble une cavité.

Avantageusement, au moins une partie des tubes plats sont séparés par paires d'une même distance.

Avantageusement, les tubes plats sont séparés par paires d'une même distance.

Grâce à ces configurations particulières de tube, il est possible d'augmenter la surface d'échange thermique des tubes avec le matériau à changement de phases, puisque ce dernier peut s'étendre entre les tubes et être au contact d'une surface plane des tubes. Au démarrage du véhicule, grâce à cette configuration, le matériau à changement de phase peut alors échanger avec les tubes une plus grande quantité de calories dans un temps plus court en comparaison d'autres configurations de tubes.

Avantageusement, l'échangeur thermique est un échangeur en « U ».

On entend par échangeur en « U », un échangeur thermique dont le sens de circulation du fluide réfrigérant traversant ces tubes parcourt une forme en U.

Selon une variante de l'invention, au moins un élément chauffant électrique est disposé en regard, par au moins l'une de ses faces, d'un tube.

On comprendra par l'expression « en regard », un premier élément disposé face à un deuxième élément sans contact physique direct entre ces deux éléments.

Grâce à cet élément chauffant électrique, il est possible de disposer d'une source de chaleur favorisant l'augmentation rapide de la quantité de calories emmagasinée par le module thermique.

Dans une application particulière aux véhicules hybrides ou électriques, il est possible de profiter du moment du cycle de recharge des batteries électriques d'un tel véhicule, généralement effectuée durant la nuit, pour alimenter électriquement l'élément chauffant électrique contenu dans le module thermique. Lors d'une telle recharge, l'élément chauffant électrique charge en calories le matériau à changement de phase contenu dans le boîtier du module thermique. Le matériau à changement de phase peut alors emmagasiner rapidement une grande quantité de calories. Le module thermique fonctionne alors en stockeur thermique de calories.

Ultérieurement, lors du démarrage d'un tel véhicule, c'est-à-dire après le cycle de recharge du véhicule, l'élément chauffant électrique n'est plus alimenté électriquement, le module thermique chargé en calories libère progressivement les calories emmagasinées. Les calories disponibles sont alors échangées avec les tubes de l'échangeur thermique contenu dans le module thermique. Lorsque le circuit fermé de l'installation de conditionnement est utilisé en mode pompe à chaleur, particulièrement au démarrage d'un tel véhicule, le module thermique vient suppléer l'évaporateur, le fluide réfrigérant parcourant alors l'échangeur thermique du module thermique. Les calories échangées entre le matériau à changement de phase et les tubes favorisent ainsi l'augmentation de l'enthalpie du fluide réfrigérant traversant ces tubes. Le module thermique fonctionne alors en déstockeur thermique de calories. Ainsi, cette configuration a pour effet d'empêcher le givrage de l'évaporateur du circuit fermé tout en favorisant l'augmentation de la température de l'habitacle du véhicule.

Selon une autre variante de l'invention, au moins l'élément chauffant électrique est en contact, par au moins l'une de ses faces, avec un tube.

Grâce à cette caractéristique, il est possible d'utiliser le tube concerné pour dissiper dans le boîtier du module les calories libérées par l'élément chauffant électrique lorsque ce dernier est alimenté électriquement, c'est-à-dire pendant le cycle de recharge du véhicule.

Selon une autre variante de l'invention, au moins l'élément chauffant électrique est disposé entre deux tubes.

Avantageusement, au moins l'élément chauffant électrique est disposé contre la face des tubes.

Grâce à cette caractéristique, il est possible d'utiliser les tubes à côté de l'élément chauffant électrique pour dissiper plus efficacement dans le boîtier du module les calories libérées par l'élément chauffant électrique lorsque ce dernier est alimenté électriquement. Cette disposition a également pour effet de permettre de caler facilement l'élément chauffant électrique.

Avantageusement, au moins l'élément chauffant électrique comprend un corps, ledit corps comprenant un élément résistif électrique.

Avantageusement, au moins l'élément chauffant électrique comprend au moins une pierre à effet CTP.

On comprend par « pierre à effet CTP » ou « pierre à Coefficient de Température Positif », c'un ensemble formé par une pierre, généralement de forme rectangulaire allongée, comprise entre deux électrodes, soit une anode et une cathode, l'ensemble étant enveloppé dans une matière isolante électriquement depuis laquelle émerge des connecteurs électriques configurés pour alimenter électriquement la pierre CTP, la pierre CTP étant constituée d'un matériau conducteur de courant capable de limiter le courant électrique le traversant selon la température de ce matériau.

Avantageusement, au moins l'élément résistif électrique est un fil résistif sérigraphié.

Avantageusement, au moins l'élément résistif électrique est un film résistif sérigraphié.

On comprendra par l'expression «film résistif », un maillage de fils électriquement conducteurs porté par une couche électriquement isolante.

Avantageusement, au moins ledit corps est formé d'une matière isolante électriquement.

Selon une particularité de l'invention, au moins le matériau à changement de phase est en contact direct avec au moins l'élément chauffant électrique.

Grâce à cette caractéristique, il est possible d'utiliser l'élément chauffant électrique pour transmettre par un contact thermique direct une grande partie des calories diffusées par ce dernier au matériau à changement de phase, ceci pendant le cycle de recharge du véhicule.

Selon une autre particularité de l'invention, au moins l'élément chauffant électrique est entouré d'un organe de dissipation de chaleur.

Avantageusement, l'organe de dissipation de chaleur est en contact direct avec au moins un des tubes en regard de l'élément chauffant électrique.

Selon une autre particularité de l'invention, dans lequel l'organe de dissipation de chaleur permet d'augmenter la surface de contact entre au moins l'élément chauffant électrique et le matériau à changement de phase.

Grâce à ces dernières caractéristiques associées à l'organe de dissipation et prises indépendamment ou en combinaison l'une avec l'autre, il est possible d'utiliser un élément chauffant électrique d'épaisseur inférieure à la distance séparant deux tubes tout en assurant un contact thermique entre l'élément chauffant électrique et le matériau à changement de phase.

De plus, ces caractéristiques ont pour intérêt de pouvoir dimensionner en puissance électrique les éléments chauffants selon une configuration désirée tout en utilisant un même modèle d'échangeur thermique dudit module, l'organe de dissipation assurant l'adaptation dimensionnelle relative à la puissance choisie.

Selon une variante de l'invention, au moins un premier élément chauffant électrique est disposé dans une première portion latérale de la pluralité de tubes empilés, au moins un deuxième élément chauffant électrique est disposé dans une deuxième portion latérale de la pluralité de tubes empilés, et au moins un troisième élément chauffant électrique est disposé dans une portion centrale de la pluralité de tubes empilés, ladite portion centrale étant disposée entre ladite première portion latérale et ladite deuxième portion latérale.

Grâce à ces dernières caractéristiques, il est possible d'optimiser le nombre d'éléments électriques utilisés dans le module thermique selon l'invention tout en assurant une efficacité de fonctionnement du module thermique en tant que stockeur ou déstockeur thermique. L'efficacité de fonctionnement étant particulièrement associée au temps nécessaire, pendant le cycle de recharge du véhicule, pour atteindre un fonctionnement optimal dudit module nécessaire pour contribuer à une montée rapide de la température de l'habitacle du véhicule.

Selon une autre variante de l'invention, au moins un élément de dissipation de chaleur est disposé entre deux tubes. Selon un exemple de réalisation, un tel élément de dissipation de chaleur est un intercalaire en contact contre une paroi externe des deux tubes.

Grâce à cette caractéristique, il est possible d'augmenter la surface d'échange de calories entre le matériau à changement de phase et le fluide réfrigérant par l'intermédiaire des tubes, lorsque le module thermique est utilisé en déstockeur, c'est-à-dire au démarrage du véhicule.

Avantageusement, au moins l'élément de dissipation de chaleur assure un contact thermique entre lesdits deux tubes.

Avantageusement, au moins l'élément chauffant électrique est d'épaisseur inférieure à une épaisseur d'au moins l'élément de dissipation de chaleur.

Avantageusement, au moins l'élément chauffant électrique et au moins l'élément de dissipation de chaleur sont d'épaisseur identique.

Grâce à ces caractéristiques, il est possible de réduire les coûts de production d'un tel module selon l'invention. En effet, un même échangeur thermique peut être utilisé dans des configurations différentes en puissance électrique nécessaire selon l'installation de conditionnement d'air du véhicule auquel il est destiné, par exemple. On comprendra ainsi qu'il est également possible d'utiliser, pour des véhicules à moteur thermique, un échangeur thermique dudit module pour véhicule hybride ou électrique.

Selon un mode de réalisation de l'invention, au moins le matériau à changement de phase est en contact direct avec au moins l'élément de dissipation de chaleur.

Grâce à cette caractéristique, lorsque le module thermique est utilisé en déstockeur, il est possible pour le matériau à changement de phase d'échanger de façon plus homogène avec le fluide réfrigérant les calories emmagasinées, ceci par l'intermédiaire d'au moins l'élément de dissipation de chaleur.

Selon un autre mode de réalisation de l'invention, des éléments chauffants électriques sont régulièrement disposés entre les tubes en alternance avec des éléments de dissipation de chaleur selon un rapport approximativement de deux éléments chauffants électriques pour cinq éléments de dissipation de chaleur.

On comprendra alors que l'élément chauffant électrique et/ou l'élément de dissipation de chaleur et/ou l'organe de dissipation de chaleur peuvent être alors au moins en partie immergé dans le matériau à changement de phase.

En variante, lorsque les tubes sont immergés dans le matériau à changement de phase, l'élément chauffant électrique et/ou l'élément de dissipation de chaleur et/ou l'organe de dissipation de chaleur peuvent être alors immergé dans le matériau à changement de phase.

Selon un autre mode de réalisation de l'invention, l'échangeur thermique comprend un collecteur d'entrée et un collecteur de sortie et la pluralité de tubes comprend une première nappe de conduits et une deuxième nappe de conduits.

Avantageusement, le collecteur d'entrée et le collecteur de sortie s'étendent chacun suivant une direction parallèle à l'axe d'empilement des tubes.

Selon une variante de réalisation de l'invention, le collecteur d'entrée est commun à chacun des conduits de ladite première nappe de conduits et le collecteur de sortie est commun à chacun des conduits de ladite deuxième nappe de conduits, les conduits de la première nappe de conduits et les conduits de la deuxième nappe de conduits étant reliés fluidiquement par paire à leur extrémité opposée au collecteur d'entrée et au collecteur de sortie.

Selon une autre variante de réalisation de l'invention, au moins l'élément chauffant électrique comprend des connecteurs électriques disposés du côté opposé au collecteur d'entrée et au collecteur de sortie.

Grâce à cette caractéristique, il est possible de disposer les éléments chauffants électriques sans modifier la configuration de l'échangeur thermique dudit module, particulièrement lorsque l'échangeur thermique dudit module est un échangeur en U. On comprend ici que les connecteurs électriques sont disposés sans interférer mécaniquement avec l'échangeur thermique. C'est la raison pour laquelle ils débouchent du module thermique à l'opposé des collecteurs.

Selon une autre variante de réalisation de l'invention, le boîtier comprend un couvercle qui ferme le boîtier et au travers duquel émergent les connecteurs électriques d'au moins l'élément chauffant électrique.

Grâce à cette caractéristique, il est possible d'utiliser le couvercle du boîtier pour contenir l'échangeur thermique et le matériau à changement de phase dans le volume du boîtier. De plus, le couvercle a pour fonction de contenir les calories dans le module.

Avantageusement, le boîtier est configuré pour contenir dans son volume, de manière étanche, le matériau à changement de phase.

Avantageusement, le boîtier est réalisé en matière plastique.

Avantageusement, le couvercle forme une partie de fermeture étanche du boîtier.

Avantageusement, le collecteur d'entrée et le collecteur de sortie s'étendent en regard d'une face du boîtier opposée au couvercle.

Avantageusement, le collecteur d'entrée comprend une entrée et le collecteur de sortie comprend une sortie, l'entrée et la sortie émergent de l'échangeur thermique depuis un même plan.

Grâce à cette caractéristique, il est possible de faciliter le raccordement du module au circuit de fluide réfrigérant.

Avantageusement, l'entrée du collecteur d'entrée et la sortie du collecteur de sortie sont côte à côte.

Avantageusement, l'entrée du collecteur d'entrée et la sortie du collecteur de sortie émergent du boîtier depuis une même face de ce dernier

Selon un mode de réalisation de l'invention, le boîtier est enveloppé d'une couche isolante thermiquement.

Avantageusement, le matériau à changement de phase est un liquide.

Avantageusement, le matériau à changement de phase est formé par des micro-billes.

Selon une série de caractéristiques, prises seules ou en combinaison, propres au matériau à changement de phase utilisé avantageusement dans le module thermique selon l'invention, on pourra prévoir que :
- le matériau à changement de phase peut comporter un matériau comprenant des composés inorganiques tels qu'un alliage de sels organiques et d'eau ;
- le matériau à changement de phase peut comporter un matériau comprenant des composés organiques tels que les paraffines et les acides gras ;
- le matériau à changement de phase peut comporter un matériau comprenant des composés eutectiques ;
- le matériau à changement de phase peut comporter un matériau comprenant des composés d'origine végétale ;
- le matériau à changement de phase est intégré dans le module thermique sous forme liquide ;
- le matériau à changement de phase est intégré dans le module thermique sous forme d'un matériau composite polymérisé, notamment sous forme de feuille ;
- la température de changement de phase dudit matériau à changement de phase est comprise entre 10°C et 40°C ;
- la température critique de changement de phase du matériau à changement de phase est de 15°C.

Avantageusement, le couvercle est en matière plastique.

Avantageusement, le couvercle est en aluminium.

Selon un autre aspect, l'invention concerne un circuit de fluide réfrigérant comprenant au moins un compresseur, un premier échangeur thermique agencé pour être disposé dans un habitacle d'un véhicule, un détendeur, un deuxième échangeur thermique agencé pour être disposé en face avant du véhicule et un module thermique selon l'une quelconque des caractéristiques précédentes, parcourus par un fluide réfrigérant.

Grâce à cette caractéristique, il est possible d'utiliser le module thermique afin d'éviter un phénomène de givrage du deuxième échangeur thermique lorsque celui-ci fonctionne en évaporateur tout en permettant une montée rapide en température du fluide réfrigérant.

On comprendra que dans un fonctionnement dans lequel le deuxième échangeur thermique est utilisé en tant qu'évaporateur, le circuit fermé fonctionne en mode pompe à chaleur et le premier échangeur thermique est utilisé en tant que condenseur.

Selon un mode de réalisation du circuit de fluide réfrigérant de l'invention, le module thermique est disposé dans une portion basse pression du circuit de fluide réfrigérant.

Avantageusement, le module thermique est disposé dans une portion basse pression du circuit de fluide réfrigérant en série entre le détendeur et le compresseur.

Grâce à cette caractéristique, il est possible particulièrement d'augmenter l'enthalpie du fluide réfrigérant avant son passage dans le deuxième échangeur thermique, et donc de dégivrer celui-ci

Selon un autre mode de réalisation du circuit de fluide réfrigérant de l'invention, le module thermique est disposé dans une portion basse pression du circuit de fluide réfrigérant en parallèle du deuxième échangeur thermique.

Avantageusement, le circuit est configuré dans un fonctionnement en mode pompe à chaleur.

Selon un autre aspect, l'invention concerne un véhicule comprenant un circuit de fluide réfrigérant selon l'invention.

D'autres caractéristiques, détails et avantages de l'invention ressortiront plus clairement à la lecture de la description donnée ci-après à titre indicatif en relation avec des dessins dans lesquels :
- la figure 1 est une illustration schématique d'un circuit de fluide réfrigérant d'une installation de conditionnement d'air d'un véhicule dans un fonctionnement correspondant à celui d'une pompe à chaleur et dans lequel on a représenté une configuration possible du module thermique selon l'invention ;
- la figure 2 est une illustration en vue en perspective du module thermique selon l'invention dans laquelle on a représenté le boîtier contenant la pluralité de tubes de l'échangeur thermique, le boîtier étant recouvert d'un couvercle de fermeture représenté ici séparé du reste du module thermique ;
- la figure 3 est une illustration en coupe et en perspective du module thermique selon l'invention dans laquelle on a représenté des éléments chauffants électriques et des éléments de dissipation de chaleur disposés en alternance entre des tubes de l'échangeur thermique ;
- la figure 4 est une illustration en perspective du boîtier du module thermique selon l'invention ;
- la figure 5 est une illustration longitudinale en coupe de l'échangeur thermique du module thermique dans laquelle on a représenté le collecteur d'entrée relié fluidiquement à une première nappe de conduits de la pluralité de tubes ;
- la figure 6 est une illustration de dessus en coupe de l'échangeur thermique selon l'invention dans laquelle on a représenté plus en détail le collecteur d'entrée et le collecteur de sortie ;
- la figure 7 est une vue en coupe de l'échangeur thermique selon l'invention dans laquelle on a représenté plus en détail la liaison fluidique entre une paire de conduits formée par un conduit de la première nappe de conduits relié fluidiquement à un conduit de la deuxième nappe de conduits.

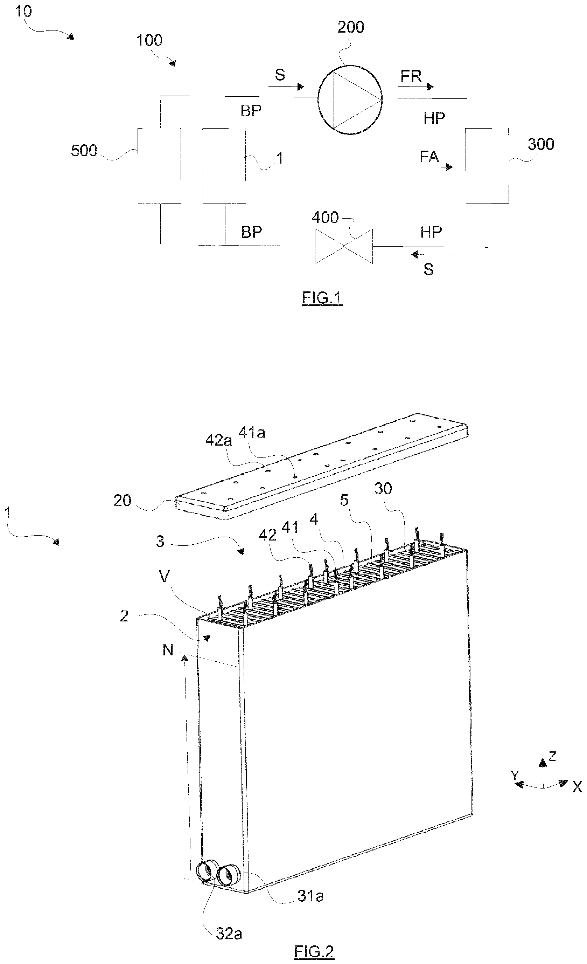

Sur la figure 1, une installation 10 de conditionnement d'air pour un habitacle de véhicule, notamment automobile, comprend un circuit fermé 100 à l'intérieur duquel circule un fluide réfrigérant FR dans un sens de circulation S. Sur l'exemple de réalisation illustré, le circuit fermé 100 comprend essentiellement, successivement en série et suivant un même sens de circulation du fluide réfrigérant FR, un compresseur 200, un condenseur 300 ou refroidisseur de gaz, un détendeur 400 et au moins un évaporateur 500.

On comprendra que dans la description de l'invention on s'intéresse particulièrement à un mode de fonctionnement d'une telle installation 10 de conditionnement d'air dont le circuit fermé 100 décrit correspond à un fonctionnement en mode pompe à chaleur, ce fonctionnement étant associé à une utilisation de l'installation 10 de conditionnement d'air en tant que chauffage, ceci principalement afin d'augmenter la température de l'habitacle du véhicule.

On notera également, que l'exemple illustré d'une architecture minimale du circuit fermé 100 est donné à titre indicatif et n'est pas restrictif quant à la portée de l'invention au regard de diverses architectures possibles du circuit fermé 100.

On va maintenant décrire le cycle de fonctionnement d'un tel circuit fermé 100 utilisé en mode pompe à chaleur lorsqu'il ne comprend pas un module thermique 1 selon l'invention.

Le compresseur 200 du circuit fermé 100 a pour fonction d'augmenter la pression du fluide réfrigérant FR. En entrée du compresseur 200, le fluide réfrigérant FR est dans une phase gazeuse basse pression. En sortie du compresseur 200, le fluide réfrigérant FR est dans une phase gazeuse haute pression. Le fluide réfrigérant FR en phase gazeuse haute pression est ensuite condensé par le condenseur 300. Cette condensation est principalement réalisée par un échange thermique réalisé par les parois du condenseur 300 entre le fluide réfrigérant FR circulant dans le condenseur 300 et un flux d'air FA traversant le condenseur 300 et envoyé vers l'habitacle du véhicule. La condensation permet ainsi d'augmenter la température du flux d'air FA. L'habitacle du véhicule est alors réchauffé par ce flux d'air FA. Le condenseur 300 réalise alors un changement de phase du fluide réfrigérant FR, d'une phase gazeux vers une phase liquide, en vue d'alimenter une entrée du détendeur 400. La circulation du fluide réfrigérant FR entre la sortie du compresseur 200 et l'entrée du détendeur 400 correspond à une portion haute pression HP du circuit fermé 100. Le détendeur 400 permet d'abaisser la pression du fluide réfrigérant FR pour fournir en sortie un fluide réfrigérant FR dans une phase liquide basse pression et destiné à alimenter l'évaporateur 500. L'évaporateur 500 permet alors l'évaporation du fluide réfrigérant FR. Cette évaporation est principalement réalisée par un échange thermique réalisé par les parois de l'évaporateur 500 entre le fluide réfrigérant FR circulant dans l'évaporateur 500 et un flux d'air extérieur à l'habitacle traversant l'évaporateur 500. L'évaporateur 500 réalise alors un changement de phase du fluide réfrigérant FR d'une phase liquide vers une phase gazeux, avant d'atteindre l'entrée du compresseur 200. La circulation du fluide réfrigérant FR entre la sortie du détendeur 400 et l'entrée du compresseur 200 correspond à une portion basse pression BP du circuit fermé 100. La portion basse pression BP et la portion haute pression HP forment ensemble le circuit fermé 100.

Le module thermique 1 selon l'invention est destiné à équiper un tel circuit fermé 100. Un tel module 1 peut être disposé dans la portion basse pression BP du circuit fermé 100 de fluide réfrigérant FR. Selon une configuration préférée, le module thermique 1 peut être disposé en parallèle de l'évaporateur 500 de la portion basse pression BP.

Dans cette dernière configuration, au démarrage du véhicule, le module thermique 1 permet d'échanger des calories avec le fluide réfrigérant FR, ce qui permet avantageusement d'élever l'enthalpie du fluide FR circulant de la portion basse pression BP du circuit fermé 100. Cet échange thermique est réalisé dès lors que le matériau à changement de phase du module 1 est dans un état apte à transmettre des calories au fluide réfrigérant FR.

Le passage du fluide réfrigérant FR par le module thermique 1 assure une montée de l'enthalpie du fluide réfrigérant FR supérieure à celle qu'il aurait eu en passant classiquement par l'évaporateur 500, ainsi on utilise les calories stockées préalablement dans le module thermique 1 pour réchauffer le fluide réfrigérant FR et le maintenir dans des conditions adéquates au réchauffement du flux d'air FA amené à traverser le condenseur 300 pour alimenter l'habitacle.

En outre, au démarrage du véhicule, notamment dans des conditions de grand froid, lorsque le module thermique 1 est chargé, le fluide réfrigérant FR est amené à passer par le module thermique 1 plutôt que par l'évaporateur 500, on évite ainsi un givrage sur les parois de l'évaporateur 500 qui tend à boucher le passage d'air.

Tel que cela a été précisé précédemment, le module thermique 1 est monté en parallèle de l'évaporateur 500 sur le circuit de fluide réfrigérant. On pourra notamment prévoir de réaliser cette mise en parallèle du module thermique 1 par l'intermédiaire d'au moins une vanne pilotée pour contrôler le débit de fluide réfrigérant FR passant par le module thermique 1.

Dans une autre configuration, le module thermique 1 peut être disposé dans la portion basse pression BP en série avec l'évaporateur 500. Encore plus avantageusement, le module thermique 1 peut être disposé dans la portion basse pression BP en série entre le détendeur 400 et l'évaporateur 500.

Selon l'invention, le module thermique 1 comprend au moins un matériau à changement de phase. Le matériau à changement de phase peut être choisi de manière à présenter une transition solide-liquide. Lorsque le matériau à changement de phase atteint sa température de changement de phase, après avoir été chauffé ou refroidi, il emmagasine ou restitue des calories relativement à son environnement proche. Le matériau à changement de phase est présent dans un boîtier 2 du module thermique 1 dans un état liquide, ou sous forme de billes, par exemple.

On pourra introduire le matériau à changement de phase dans le boîtier 2 du module thermique 1 aussi bien sous forme liquide, que sous forme solide, et notamment dans ce dernier cas sous forme d'un matériau composite polymérisé, par exemple sous forme de feuille.

La plage de température de changement de phase d'un tel matériau peut notamment être de l'ordre de 10°C à 40°C, et il est intéressant dans le mode d'application ici décrit de prévoir une température de changement de phase égale à 15°C.

On comprend que cette température de changement de phase peut varier d'une application à l'autre sans sortir du contexte de l'invention, et que la valeur de 15°C n'est ici donnée qu'à titre d'exemple. Il convient de noter que le matériau à changement de phase peut être en outre caractérisé par la vitesse d'absorption et de restitution des calories, notamment pour choisir un matériau susceptible d'offrir une grande réactivité aux variations de température du fluide réfrigérant FR, qui peut être amené à varier fréquemment en fonction des besoins de gestion thermique du véhicule.

Lorsqu'un véhicule électrique ou hybride équipé d'un tel module thermique 1 est rechargé en courant électrique, il est avantageux de profiter de la recharge du véhicule pour alimenter électriquement un ou plusieurs élément(s) chauffant(s) électrique(s) 4 contenu(s) dans le module thermique 1. Lors d'une telle recharge, le ou les élément(s) chauffant(s) électrique(s) 4 charge(nt) en calories le matériau à changement de phase contenu dans le boîtier 2 du module thermique 1. Le matériau à changement de phase peut alors emmagasiner rapidement une grande quantité de calories.

Ce fonctionnement permet de stocker progressivement, à l'aide du matériau à changement de phase, les calories dissipées par le ou les élément(s) électrique(s) 4. On comprendra que le module thermique 1 est utilisé en stockeur thermique de calories.

Une fois le matériau à changement de phase chargé en calories, et lors du démarrage d'un tel véhicule, le module thermique 1 libère progressivement les calories emmagasinées dans le module thermique 1. Ces calories sont alors absorbées par le fluide réfrigérant FR par l'intermédiaire d'un échangeur thermique contenu dans le module thermique 1.

Ce fonctionnement permet de déstocker progressivement les calories du matériau à changement de phase tout en réduisant la consommation électrique du circuit fermé 100 et/ou d'augmenter la puissance de chauffage de l'installation 10 de conditionnement d'air. Le compresseur 200 consomme moins d'énergie électrique car le fluide réfrigérant FR possède une enthalpie plus élevée grâce à la restitution des calories opérée par le module thermique 1.

Une fois le module thermique 1 déchargé, le fluide FR peut être orienté, à l'aide d'une vanne de régulation, vers l'évaporateur 500, de sorte que l'on retrouve un mode de fonctionnement classique, c'est-à-dire correspondant au fonctionnement du circuit fermé 100 sans le module thermique 1. Le fluide réfrigérant FR échange thermiquement avec l'air passant à travers l'évaporateur 500 avant d'être dirigé vers le compresseur 200.

On comprendra que l'utilisation du module thermique 1 permet ainsi de retarder le démarrage de l'évaporateur 500. Lorsque celui-ci est utilisé, la puissance absorbée en face avant pour tempérer le fluide réfrigérant FR est diminuée, de sorte que l'on limite le risque de givrage par une diminution de la condensation sur les parois de l'évaporateur 500.

On comprend à la lecture de ce qui précède que l'invention permet, notamment lorsque le véhicule électrique ou hybride est en cycle de recharge électrique, de stocker des calories dans un module thermique 1, afin de pouvoir utiliser ultérieurement ces calories stockées, notamment au démarrage du véhicule et lorsque la température est très basse, par exemple inférieure à -10°C. Cette utilisation a principalement pour intérêt d'éviter d'utiliser l'évaporateur 500 pouvant givrer dans de telles conditions.

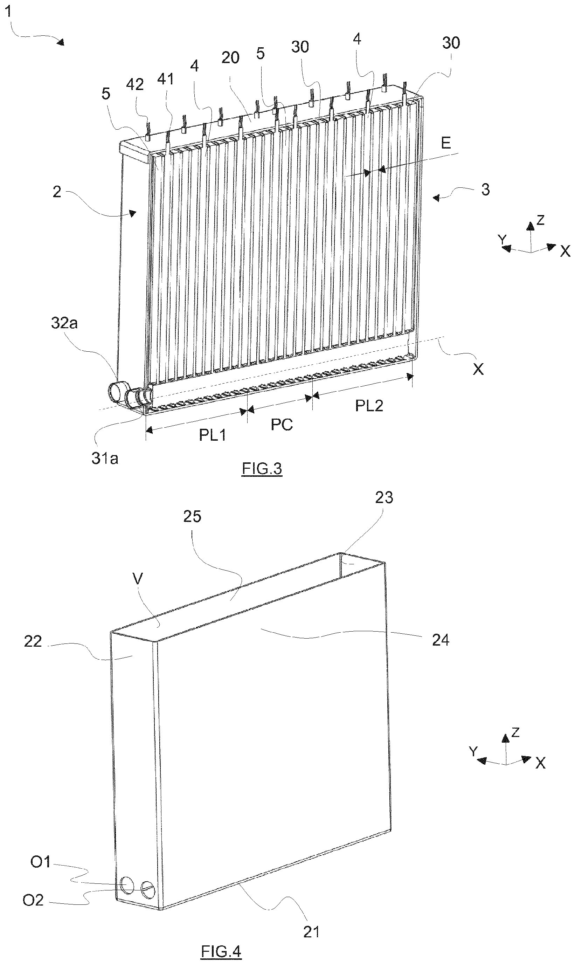

Tel qu'illustré aux figures 2 et 3, on a représenté le module thermique 1 selon l'invention équipé d'un boîtier 2 logeant dans son volume V une pluralité de tubes 30 de l'échangeur thermique 3 et fermé par un couvercle 20 de fermeture. La pluralité de tubes 30 est reliée fluidiquement, à la fois, à une entrée 31a d'un collecteur d'entrée et à une sortie 32a d'un collecteur de sortie de l'échangeur thermique 3. L'entrée 31a du collecteur d'entrée 31 et la sortie 32a du collecteur de sortie 32 sont configurées pour émerger du boîtier 2 du module depuis des ouvertures formées dans le boîtier 2 à cet effet. De préférence, le boîtier 2 est rendu étanche par ses ouvertures par un dispositif d'étanchéité disposé sur le contour de ses ouvertures. On notera également que l'entrée 31a du collecteur d'entrée 31 et la sortie 32a du collecteur de sortie 32 sont contenues dans un même plan YZ. L'entrée 31a du collecteur d'entrée 31 et la sortie 32a du collecteur de sortie 32 sont destinées à être reliées à la boucle basse pression du circuit fermé.

Tels que représentés sur la figure 3, les tubes 30 sont empilés suivant un même axe X et sont destinés à être parcourus par un fluide réfrigérant FR. Le volume V du boîtier 2 est de plus destiné à contenir le matériau à changement de phase. Pour assurer une fonction de stockage de calories du module thermique 1, le matériau à changement de phase est disposé pour être en contact direct avec les tubes 30 de l'échangeur thermique 3. Une telle disposition peut être réalisée en noyant l'échangeur thermique 3 dans le matériau à changement de phase contenu dans le volume V.

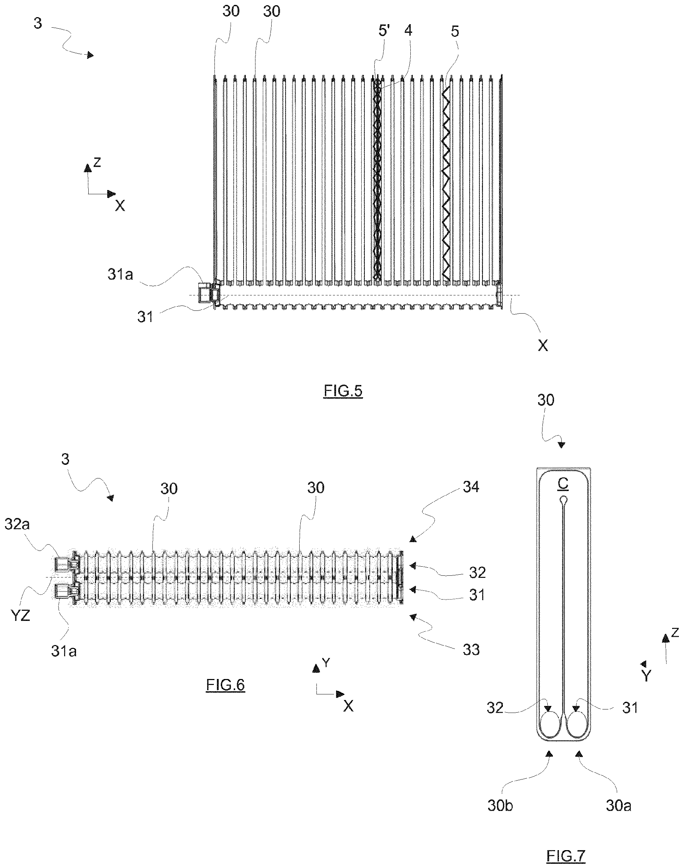

Les tubes 30 sont des tubes plats. Chacun de ces tubes 30 s'étend dans un plan YZ perpendiculaire à l'axe X d'empilement des tubes 30. Chaque tube est formé par deux plaques disposées l'une contre l'autre et délimitant ensemble une cavité C, telle qu'illustrée à la figure 7. Les plaques formant les tubes 30 s'étendent chacune suivant un plan YZ perpendiculaire à l'axe X d'empilement des tubes 30.

Entre les tubes 30 sont disposés en alternance des éléments chauffants électriques 4 et des éléments de dissipation de chaleur 5. Plus particulièrement, chaque élément chauffant électrique 4 et chaque élément de dissipation de chaleur 5 sont respectivement disposés entre une paire de tubes 30 correspondant à deux tubes 30 à côté l'un par rapport à l'autre. Ainsi, on comprendra que les éléments chauffants électriques 4 sont empilés les uns par rapport aux autres suivant le même axe X que la pluralité de tubes 30. De la même façon, on comprendra que les éléments de dissipation de chaleur 5 sont alignés les uns par rapport aux autres suivant le même axe X que la pluralité de tubes 30.

On comprendra que les éléments chauffants électriques 4 et les éléments de dissipation de chaleur 5 sont représentés de façon schématique par des formes rectangulaires chacune intercalée entre deux tubes 30.

Les éléments chauffants électriques 4 et les éléments de dissipation de chaleur 5 s'étendent chacun dans un plan YZ perpendiculaire à l'axe X d'empilement des tubes 30 selon des dimensions globalement identiques aux dimensions des plaques formant les tubes 30.

Les éléments chauffants électriques 4 comprennent chacun des connecteurs électriques 41, 42 s'étendant vers l'extérieur au-delà du boîtier 2 pour traverser le couvercle 20 par des orifices 41a, 42a prévus à cet effet. Le couvercle 20 de fermeture a principalement pour fonction d'assurer la protection du contenant du boîtier 2. De plus, le couvercle 20 de fermeture peut être configuré pour assurer une fonction d'étanchéité du boîtier 2 de sorte à contenir le matériau à changement de phase dans le volume V du boitier 2 et empêcher l'insertion de corps étrangers dans le volume V du boîtier 2. Le boîtier 2 du module thermique 1 peut alors permettre de contenir dans son volume V, de manière étanche, le matériau à changement de phase. Les connecteurs électriques 41, 42 des éléments chauffants électriques 4 peuvent alors être reliés électriquement à au moins une batterie du véhicule.

La figure 3 illustre, plus en détail, la répartition des éléments chauffants électriques 4 et des éléments de dissipation de chaleur 5 dans la pluralité de tubes 30 du module 1. Les éléments chauffants électriques 4 sont chacun disposés en regard de chacun des tubes 30 d'une paire de tubes 30, telle que définie précédemment.

On comprendra que, selon une configuration possible, un des éléments chauffants électriques 4 peut être d'épaisseur E mesurée le long de l'axe X d'empilement des tubes 30 inférieure à une distance séparant deux tubes 30, à côté l'un par rapport à l'autre, mesurée le long de l'axe X d'empilement des tubes 30.

Dans la configuration du mode de réalisation représenté aux figures 2 et 3, chacun des éléments chauffants électriques 4 est en contact par ses faces extérieures perpendiculaires à l'axe X d'empilement des tubes 30 avec une paire de tubes 30.

De façon illustrée, les éléments chauffants électriques 4 et les éléments de dissipation de chaleur 5 sont disposés dans le boîtier 2 du module 1 pour être en contact direct avec le matériau à changement de phase.

On notera que de manière avantageuse, les éléments chauffants électriques 4 et les éléments de dissipation de chaleur 5 sont de dimensions identiques, ce qui offre un avantage pour interchanger ces deux éléments, et donc faciliter la fabrication de l'échangeur thermique 3.

Toutefois, l'invention n'est pas limitée à cette configuration et le module thermique 1 peut ne pas contenir d'éléments de dissipation de chaleur 5 et/ou d'éléments chauffants électriques 4. Dans le cas où l'invention ne comprendrait pas d'éléments chauffants électriques 4, le couvercle 20 du boîtier 2 ne comprendrait pas d'orifices 41a, 42a, tels que décrits.

La figure 3 illustre en outre une section en coupe du collecteur d'entrée tel que relié fluidiquement aux tubes 30.

Le collecteur d'entrée et le collecteur de sortie s'étendent en regard d'une paroi de fond 21 du boîtier 2 opposée au couvercle 20. En d'autres termes, l'échangeur thermique 3 est logé dans le boîtier 2 de sorte que le collecteur d'entrée et le collecteur de sorte soient disposés à proximité de la paroi de fond 21. Dans cette configuration, les connecteurs électriques 41, 42 des éléments chauffants électriques 4 sont disposés du côté opposé au collecteur d'entrée et au collecteur de sortie. En d'autres termes, les connecteurs électriques 41, 42 émergent du boîtier 2 à l'opposé de la paroi de fond 21.

On notera également que au moins un premier élément chauffant électrique 4 est disposé dans une première portion latérale PL1 de la pluralité de tubes 30 empilés, au moins un deuxième élément chauffant électrique 4 étant disposé dans une deuxième portion latérale PL2 de la pluralité de tubes 30 empilés, et au moins un troisième élément chauffant électrique 4 est disposé quant à lui dans une portion centrale PC de la pluralité de tubes 30 empilés, ladite portion centrale PC étant disposée entre ladite première portion latérale PL1 et ladite deuxième portion latérale PL2.

Toutefois, l'invention n'est pas limitée à cette configuration, et au moins un élément chauffant électrique 4 est disposé dans une portion quelconque avantageuse.

En variante, des éléments chauffants électriques 4 peuvent être régulièrement disposés entre les tubes 30 proportionnellement en alternance avec des éléments de dissipation de chaleur 5 selon un rapport approximativement de deux éléments chauffants électriques 4 pour cinq éléments de dissipation de chaleur 5. Un tel rapport favorise un chargement lent du matériau à changement de phase, notamment pendant une charge de nuit, alors que le nombre plus important d'éléments de dissipation de chaleur 5 favorise un échange thermique rapide et intense entre le matériau à changement de phase et le fluide réfrigérant qui circule dans les tubes 30.

Dans le cas du mode de réalisation illustré à la figure 3, le module thermique 1 comprend vingt-et-un éléments de dissipation de chaleur 5 et huit éléments chauffants électriques 4. Plus particulièrement, un élément de dissipation de chaleur 5 de la portion centrale PC est disposé entre deux éléments chauffants électriques 4, tandis que trois éléments de dissipation de chaleur côte à côte d'une portion latérale PL1, PL2 sont disposés entre deux éléments chauffants électriques 4. Cette disposition a pour intérêt, entre autres, de repartir au mieux les calories dissipées par les éléments chauffants électriques 4 dans le matériau à changement de phase contenu dans le module 1.

Sur la figure 4, on a représenté le boîtier 2 du module thermique 1 sans l'échangeur thermique 3. Le boîtier 2 de forme rectangulaire définit à l'intérieur de ses parois le volume V du boîtier 2. Le boîtier 2 est ouvert par l'une de ses faces opposées à la paroi de fond 21. Des parois latérales 22, 23 permettent de définir une largeur du boîtier 2. Des parois longitudinales 24, 25 permettent de définir une longueur du boîtier 2. L'une des parois latérales 22, 23 du boîtier 2 comprend les deux ouvertures O1, O2 disposées l'une à côté de l'autre. Ces ouvertures O1, O2 sont par ailleurs situées à proximité de la paroi de fond 21 et sont destinées à recevoir l'entrée du collecteur d'entrée et la sortie du collecteur de sortie pour émerger vers l'extérieur du boîtier 2, tel que décrit précédemment. En référence à la figure 2 ou 3, on comprendra que les tubes 30 sont parallèles par leurs plus grandes surfaces aux parois latérales 22, 23 du boîtier 2.

En variante de l'invention, le boîtier 2 peut être enveloppé d'une couche isolante thermiquement. Cette couche isolante permet d'éviter une dissipation des calories emmagasinées dans le module 1 vers l'extérieur de son boîtier 2.

Avantageusement, le matériau à changement de phase occupe approximativement 90 pourcent du volume V du boîtier 2. Ce pourcentage de remplissage du boîtier 2 permet d'éviter les risques de gonflement du boîtier 2 lors des changements de phase du matériau à changement de phase. On a illustré à la figure 2, un niveau N de remplissage correspondant schématiquement au niveau de remplissage du matériau à changement de phase pour occuper 90 pourcent du volume V du boîtier 2. Tel qu'illustré à la figure 2, les tubes 30 de l'échangeur thermique 3 dépassent au-dessus du niveau N de remplissage. Lorsque les tubes 30 sont immergés dans le matériau à changement de phase, on comprendra que le boîtier 2 illustré dans le mode de réalisation des figures 2 à 4 peut être dimensionné pour respecter cette dernière caractéristique de remplissage tout en permettant que les tubes soient immergés dans le matériau à changement de phase.

Tel qu'illustré à la figure 5, on a représenté l'échangeur thermique 3 du module 1 formé en partie par la pluralité de tubes 30. On a également représenté un mode de réalisation avantageux d'un élément de dissipation de chaleur 5 formé par une tôle ondulée en contact de deux tubes 30 à côté l'un par rapport à l'autre, tels que définis précédemment. Une telle tôle ondulée est disposée en appui serré par ses extrémités latérales contre les tubes 30 à côté l'un par rapport à l'autre. Avantageusement, une telle tôle ondulée est solidarisée aux tubes 30 par brasage. De façon particulière, une telle tôle ondulée peut être en aluminium.

La figure 5 illustre un exemple de réalisation d'un élément de dissipation de chaleur 5. La figure 5 illustre également un exemple de réalisation d'un élément chauffant électrique 4 tel qu'entouré par un organe de dissipation de chaleur 5'. On comprendra que l'invention n'est pas limitée à un tel exemple de réalisation et l'invention pourra comprendre une combinaison non limitative de ces exemples de réalisation. Ces exemples de réalisation peuvent bien entendu être répartis tel que décrit précédemment.

Lorsque l'un des éléments chauffants électriques 4 est d'épaisseur E mesurée le long de l'axe X d'empilement des tubes 30 inférieure à une distance mesurée le long de l'axe X séparant deux tubes 30 à côté l'un par rapport à l'autre, un organe de dissipation de chaleur 5' peut être prévu pour entourer l'élément chauffant électrique 4 de sorte à former un ensemble d'épaisseur E mesurée le long de l'axe X d'empilement des tubes 30 égale à la distance mesurée le long de l'axe X séparant deux tubes 30, tel qu'illustré à la figure 5.

On notera que les variantes de réalisation des éléments chauffants électriques 4, des éléments de dissipation de chaleur 5 et des organes de dissipation de chaleur 5' peuvent être combinées sans limite les uns avec les autres en vue de dimensionner la puissance électrique du module thermique 1 selon la configuration désirée.

Tel qu'illustré aux figures 6 et 7, on a représenté l'échangeur thermique 3 formé par la pluralité de tubes 30. Chacun des tubes 30 est relié fluidiquement au collecteur d'entrée 31 et au collecteur de sortie 32. Plus particulièrement, une première nappe 33 de conduits 30a et une deuxième nappe 34 de conduits 30b s'étendent suivant l'axe X d'empilement des tubes 30 symétriquement par rapport à un plan XZ. Telle qu'illustrée, une extrémité de chacun des conduits 30a de la première nappe 33 est reliée fluidiquement au collecteur d'entrée 31 alors qu'une extrémité de chacun des conduits 30b de la deuxième nappe 34 est reliée fluidiquement au collecteur de sortie 32.

On comprendra que chaque tube 30 est constitué par une paire de conduits 30a, 30b formée par un conduit 30a de la première nappe 33 symétriquement disposé selon le plan XZ par rapport à un autre conduit 30b de la deuxième nappe 34 et respectivement reliés fluidiquement l'un par rapport à l'autre par une autre extrémité opposée au collecteur d'entrée et au collecteur de sortie, telle qu'illustrée à la figure 7.

On notera également que le conduit 30a de la première nappe 33 et le conduit 30b de la deuxième nappe 34 sont délimités par deux plaques aboutées l'une contre l'autre de sorte à former un tube 30.

On comprendra également que les plaques participent également à former le collecteur d'entrée 31 et le collecteur de sortie 32.

Ainsi, le collecteur d'entrée 31 est commun à chacun des conduits 30a de ladite première nappe 33 de conduits 30a et le collecteur de sortie 32 est commun à chacun des conduits 30b de ladite deuxième nappe 34 de conduits 30b, les conduits 30a de la première nappe 33 de conduits 30a et les conduits 30b de la deuxième nappe 34 de conduits 30b étant reliés fluidiquement par paire à leur extrémité opposée au collecteur d'entrée 31 et au collecteur de sortie 32.

On notera également que le collecteur d'entrée 31 et le collecteur de sortie 32 comprennent respectivement à leur extrémité opposée à l'entrée 31a du collecteur d'entrée 31 et à la sortie 32a du collecteur de sortie 32 des plaques de fermeture.

En référence à la figure 3, les connecteurs électriques 41, 42 des éléments chauffants électriques 4 sont disposés du côté des conduits 30a, 30b de la première nappe 33 et de la deuxième nappe 34.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associés les uns avec les autres selon diverses combinaisons dans la mesure où ils ne sont pas incompatibles ou exclusifs les uns des autres. En particulier toutes les variantes et modes de réalisation décrits précédemment sont combinables entre eux.

## Revendications

1. Module thermique (1) pour véhicule automobile comprenant un boîtier (2) et un échangeur thermique (3), ledit échangeur thermique (3) comprenant une pluralité de tubes (30) empilés suivant un même axe (X) et destinés à être parcourus par un fluide réfrigérant (FR), ledit boîtier (2) définissant un volume (V) destiné à recevoir la pluralité de tubes (30), un matériau à changement de phase est contenu dans le volume (V) du boîtier (2) en contact direct avec les tubes (30) de l'échangeur thermique (3), les tubes (30) étant au moins en partie immergés dans le matériau à changement de phase.

2. Module thermique (1) selon la revendication précédente, dans lequel au moins un élément chauffant électrique (4) est disposé en regard, par au moins l'une de ses faces, d'un tube (30).

3. Module thermique (1) selon la revendication précédente, dans lequel au moins l'élément chauffant électrique (4) est en contact, par au moins l'une de ses faces, avec un tube (30).

4. Module thermique (1) selon l'une quelconque des revendications précédentes, dans lequel au moins un élément de dissipation de chaleur (5) est disposé entre deux tubes (30).

5. Module thermique (1) selon l'une quelconque des revendications précédentes, dans lequel l'échangeur thermique (3) comprend un collecteur d'entrée (31) et un collecteur de sortie (32) et la pluralité de tubes (30) comprend une première nappe (30a) de conduits (30) et une deuxième nappe (30b) de conduits (30).

6. Module thermique (1) selon l'une quelconque des revendications précédentes prise en combinaison avec l'une quelconque des revendications 2 ou 3, dans lequel au moins l'élément chauffant électrique (4) comprend des connecteurs électriques (41, 42) disposés du côté opposé au collecteur d'entrée (31) et au collecteur de sortie (32).

7. Module thermique (1) selon la revendication précédente, dans lequel le boîtier (2) comprend un couvercle (20) qui ferme le boîtier (2) et au travers duquel émergent les connecteurs électriques (41, 42) d'au moins l'élément chauffant électrique (4).

8. Module thermique (1) selon l'une quelconque des revendications précédentes, dans lequel le boîtier (2) est enveloppé d'une couche isolante thermiquement.

9. Circuit (100) de fluide réfrigérant (FR) comprenant au moins un compresseur (200), un premier échangeur thermique (300) agencé pour être disposé dans un habitacle d'un véhicule, un détendeur (400), un deuxième échangeur thermique (500) agencé pour être disposé en face avant du véhicule et un module thermique (1) selon l'une quelconque des revendications précédentes, parcourus par un fluide réfrigérant (FR).

10. Circuit (100) de fluide réfrigérant (FR) selon la revendication précédente, dans lequel le module thermique (1) est disposé dans une portion basse pression (BP) du circuit de fluide réfrigérant (FR).
